# EUROPÄISCHE PATENTANMELDUNG

(11) **EP 0 538 879 A1**
(43) Veröffentlichungstag der Anmeldung: **28.04.1993**
(21) Anmeldenummer: 92118178.0
(22) Anmeldetag: 23.10.1992
(51) Int. Cl.: G02B 5/20

(54) **Wellenlängenfilter für Lichtwellenleiter**

(30) Priorität: 23.10.1991 DE 4134959
(71) Anmelder: ELECTRONIC PRODUCTION PARTNERS GmbH, D-81245 München (DE); Kabelmetal Electro GmbH, D-30179 Hannover (DE)
(72) Erfinder: Heitmann, Walter, W-6101 Gross-Bieberau (DE); Strube, Heribert, W-6100 Darmstadt (DE)
(74) Vertreter: Baronetzky, Klaus, Dipl.-Ing.

(57) **Zusammenfassung**

Bei einem Wellenlängenfilter für Lichtwellenleiter ist es vorgesehen, den Lichtwellenleiter (10) spulenförmig zu einer Faserspule zu krümmen, wobei der an sich minimal zulässige Biegeradius unterschritten wird und beispielsweise geringer als 15 mm ist.

## Beschreibung

Die Erfindung betrifft ein Wellenlängenfilter, gemäß dem Oberbegriff von Anspruch 1.

Derartige Wellenlängenfilter für Lichtwellenleiter werden in optischen Netzen, insbesondere im Ortsnetz, eingesetzt. Wellenlängenfilter dienen der Trennung und Sperrung von Spektralbereichen in Lichtwellenleitern. Sie werden insbesondere in Lichtwellenleiter-Systemen benötigt, bei denen im Wellenlängen-Multiplexverfahren gearbeitet wird. Bei derartige Systemen werden mehrere Wellenlängen gleichzeitig übertragen, beispielsweise im Bereich von 1300 nm und 1550 nm.

Es ist bekannt, sogenannte Interferenzfilter als Wellenlängenfilter zu verwenden. Derartige Filter bestehen aus einer Vielzahl dielektrischer Schichten, die gegen die Achse des Lichtwellenleiters geneigt sein können, um Reflexionen und damit eine Rückstrahlung der eingeleiteten optischen Informationen zumindest zu vermindern.

Dennoch ist bei derartigen Filtern die sogenannte Rückflußdämpfung relativ gering. Zudem ist das Filter vergleichsweise teuer, zumal eine separate Montage mit entsprechenden Anschlüssen des Lichtwellenleiters erforderlich ist.

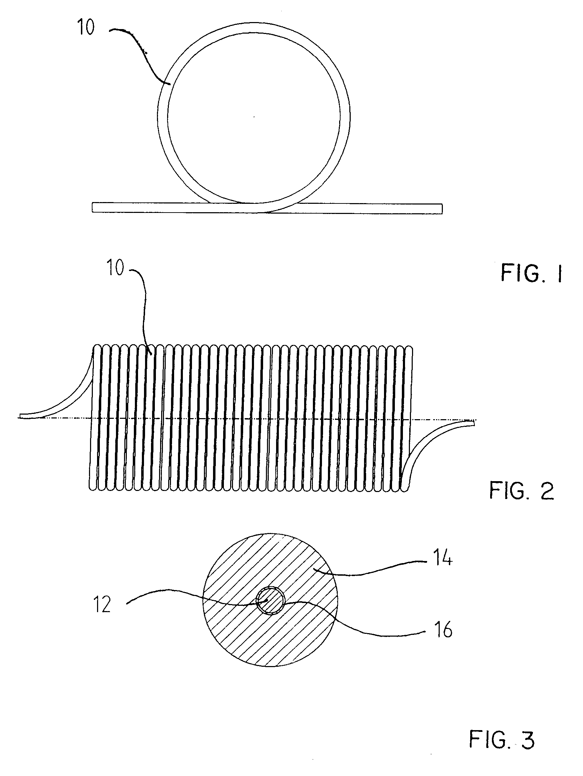

In Electronics Letters 27,3 (1991), Seite 230 - 232 ist ein Tiefpaßfilter vorgeschlagen worden, bei welchem Einmodenfasern im Kernbereich mit Seltenen Erden dotiert sind. Als besonders empfehlenswert für die Dotierung werden die Elemente Erbium und Neodym bezeichnet. Wie aus Fig. 2 auf Seite 231 ersichtlich ist, sinkt die Sperrdämpfung oberhalb von 1580 nm auf Werte unterhalb von 20 dB, so daß nicht mehr von einer ausreichenden Sperrdämpfung gesprochen werden kann. Außerdem ist diese Lösung vergleichsweise teuer, da besonders hergestellte Lichtwellenleiter erforderlich sind. Ein weiterer Nachteil besteht in der verleichsweise großen Rückreflexion, da bei dem Übergang von üblichen Lichtwellenleitern auf diese speziellen Lichtwellenleiter mit dotiertem Kernbereich ein Brechzahlsprung entsteht.

Daher liegt der Erfindung die Aufgabe zugrunde, ein Wellenlängenfilter für Lichtwellenleiter gemäß dem Oberbegriff von Anspruch 1 zu schaffen, das trotz verbesserter Rückreflexionswerte und geringer Kosten eine verbesserte Flexibilität hinsichtlich der erwünschten Filtercharakterisitk mit sich bringt, wobei ein unerwünschter Abfall der Sperrwirkung bei größeren Wellenlängen vermieden wird.

Dieser Aufgabe wird erfindungsgemäß durch Anspruch 1 gelöst. Vorteilhafte Weiterbildungen ergeben sich aus den Unteransprüchen.

Überraschend läßt sich mit dem erfindungsgemäß zu einer Faserspule gekrümmten Lichtwellenleiter dann in sehr einfacher und vorteilhafter Weise die gewünschte Filterwirkung erzielen, wenn der minimale Biegeradius des Lichtwellenleiters unterschritten wird. Unter minimalem Biegeradius ist hier der kleinste zulässige Krümmungsradius zu verstehen, bei welchem praktisch noch keine Krümmungsverluste auftreten. Dieser kleinste zulässige Krümmungsradius ist von Lichtwellenleiter zu Lichtwellenleiter verschieden und wellenlängenabhängig. Bei Standard-Einmodenfasern liegt der Wert für den minimalen Biegeradius bei etwa 30 mm.

Besonders günstig ist es, daß die Filtercharakteristik sowohl hinsichtlich der Grenzwellenlänge als auch hinsichtlich der Filtersteilheit sich durch eine entsprechende Wahl des Fasertyps, des Durchmessers und der Windungsanzahl der Faserspule in weiten Bereichen beeinflussen läßt.

Die erfindungsgemäße Faserspule läßt sich in den wellenlängenselektiv zu sperrenden Lichtwellenleiter einfügen, wobei sie entweder eingespleißt werden kann oder ein Teilstück des zu beeinflussenden Lichtwellenleiters selbst als Faserspule ausgebildet sein kann. Günstig ist hierbei, daß in beiden Fällen kein Brechzahlsprung und insofern auch keine störende Rückreflexion entsteht, so daß für die Rückflußdämpfung extrem hohe Werte erreicht werden.

Die erfindungsgemäße Lösung wird anhand eines Ausführungsbeispiels näher erläutert. Dabei wurde ein 5 m langer Abschnitt einer Standard - Einmodenfaser mit einer Grenzwellenlänge von 1230 nm verwendet. Diesem Abschnitt wird ein Abschnitt aus dem gleichen Material und mit den gleichen Parametern gegenübergestellt, wobei ein Teilstück dieses Abschnittes als Faserspule ausgebildet ist. Die Faserspule hat 40 Windungen und ihr Durchmesser beträgt 16 mm.

Der spektrale Dämpfungsverlauf ergibt sich aus der Messung des geraden Faserabschnitts gegen den mit einer Faserspule versehenen Faserabschnitt.

Dabei sind 3 unterschiedliche Bereiche zu erkennen:
- unterhalb von 1200 nm steigt die Dämpfung auf 4,7 dB an. Dieser Anstieg beruht auf der Unterdrückung der höheren Moden durch die Faserspule, d. h., die Faser bleibt auch unterhalb der Grenzwellenlänge noch einmodig. In der Praxis ist dieser Bereich bisher ohne Bedeutung, weil Einmodenfasern im allgemeinen nur oberhalb der Grenzwellenlänge eingesetzt werden.
- im Bereich zwischen 1260 nm und 1340 nm findet ein allmählicher Anstieg der Dämpfung von 0,1 dB auf etwa 0,6 dB statt. Zwischen 1285 nm und 1330 nm liegt die Dämpfung unter 0,5 dB.
- oberhalb von 1370 nm steigt die Dämpfung stark an. Ursache ist die Zunahme des Modenfelddurchmessers mit wachsender Wellenlänge. Die Strahlung wird wegen der starken Faserkrümmung kaum noch geführt. Es entstehen Leck- und Strahlungsmoden, die in der Kunststoffbeschichtung der Faser absorbiert werden.
- Bei 1500 nm erreicht die Dämpfung über 40 dB. Oberhalb von 40 dB wird die Messung durch Rauscheffekte begrenzt. Für 1550 nm ergibt sich durch Extrapolation ein Wert von mehr als 60 dB.

Die hier untersuchte Faserspule hat also im 1300 nm Bereich eine Transmission von über 90 %, während oberhalb von 1500 nm weniger als 0,01 % der Lichtleistung die Faserspule passieren kann. Damit stellt die Faserspule ein Wellenlängenfilter mit hoher Transmission im Durchlaßbereich und großer Dämpfung im Sperrbereich dar.

Das erfindungsgemäße Wellenlängenfilter ist einfach und daher wirtschaftlich herzustellen.

Wenn das Wellenlängenfilter als Faserspule direkt aus einem Abschnitt des zu beeinflussenden Lichtwellenleiters realisiert wird oder wenn es in den zu beeinflussenden Lichtwellenleiter eingespleißt wird, können außerdem sehr günstige Werte für die Rückflußdämpfung erzielt werden.

Durch entsprechende Wahl des Fasertyps, des Spulendurchmessers und der Windungszahl der Faserspule, können die Dämpfungswerte im Durchlaß- und Sperrbereich in weiten Grenzen variiert und so den praktischen Erfordernissen angepaßt werden. Bei einer Faserspule mit 16 mm Durchmesser und 60 Windungen hat sich für die gleiche Faser wie im Ausführungsbeispiel die Lage des steilen Dämpfungsanstiegs um ca. 50 nm zu kürzeren Wellenlängen hin verschoben.

Für die Praxis ausreichende Dämpfungswerte lassen sich mit Faserspulen erreichen, die einen Durchmesser zwischen 3 mm und 30 mm und eine Windungszahl zwischen 1 und 200 aufweisen.

Durch das erfindungsgemäße Wellenlängenfilter ist es möglich, bei entsprechender Wahl des Lichtwellenleiters, des Spulendurchmessers und der Windungszahl der Faserspule
- bei 850 nm eine Dämpfung von weniger als 1 dB,
- oberhalb von 1200 nm eine Dämpfung von über 25 dB,
- bei 1300 nm eine Dämpfung von weniger als 1 dB und
- oberhalb von 1500 nm eine Dämpfung von über 25 dB
zu realisieren.

Das erfindungsgemäße Wellenlängenfilter kann gleichzeitig zur Unterdrückung der höheren Moden unterhalb der Grenzwellenlänge, bis zu einer vorgegebenen unteren Wellenlänge, z. B. 850 nm, eingesetzt werden.

Das erfindungsgemäße Wellenlängenfilter kann als freitragende Faserspule ausgebildet sein. In diesem Fall ist es zweckmäßig, die Windungen der Faserspule durch eine geeignete Verklebung aus Kunststoff oder einem anderen geeigneten Material, zu fixieren. Eine weitere Möglichkeit besteht darin, durch Erwärmung der Faserspule eine thermische Verklebung der Kunststoffbeschichtung des zur Faserspule ausgebildeten Lichtwellenleiters und damit ebenfalls eine Fixierung zu erreichen.

Das erfindungsgemäße Wellenlängenfilter kann auch als Faserspule auf einem Träger, wie beispielsweise einem zylindrisch ausgebildeten Kern, aufgebracht sein. Als Spulenkern eignen sich vor allem Materialien mit geringer thermischer Ausdehnung, wie z.B. Quarzglas, Zerodur oder Invar.

Ferner ist es möglich, die Faserspule mit einem optischen Steckverbinder zu kombinieren. Hierbei sind mehrere Varianten denkbar. So kann die Faserspule direkt an die Faserabschnitte (pigtails), die aus den Steckerstiften des optischen Steckverbinders herausgeführt sind, angespleißt sein. Das ist sowohl an einer Seite als auch beidseitig des optischen Steckverbinders möglich.

Eine weitere Lösung besteht in der Anordnung der erfindungsgemäßen Faserspule auf einem Teil des Steckerstiftes des optischen Steckverbinders oder auf einem speziell für diesen Zweck ausgebildeten zylindrischen Element, das Teil des optischen Steckverbinders ist.

Schließlich ist die Kombination von Faserspule und optischem Steckverbinder in der Weise möglich, daß der Faserabschnitt, der anfangs zentral im Steckerstift geführt ist, auf einem zylindrischen Teil des Steckerstiftes als Faserspule weitergeführt ist.

Gemäß einer besonders vorteilhaften Ausgestaltung der Erfindung weist die Faserspule einen Spulendurchmesser um 16 mm auf. Bei einer derartigen Faserspule tritt eine sehr geringe Dämpfung im 1300 nm-Bereich und eine hohe Sperrwirkung bei 1550 nm auf.

Andererseits steht bei derartigen, und besonders bei noch stärkeren Krümmungen die äußere Oberfläche des Fasermantels üblicher Einmodenfasern an ihrem Außenradius unter Zugspannung, an ihrem Innenradius hingegen unter Druck. Eventuell vorhandene Mikrorisse in der Quarzglasoberfläche des Fasermantels könnten unter Einwirkung von Wassermolekülen, die durch die Kunststoff-Primärschicht eindiffundieren, durch Spannungskorrosion vergrößert werden und langfristig Ermüdungsbrüche auslösen.

Die Wahrscheinlichkeit für das Auftreten eines Mikrorisses innerhalb des relativ kurzen Faserabschnitts, der für eine Spule benötigt wird, beispielsweise eine Länge von 1 bis 3 Metern für eine Windungsanzahl etwa von 30 bis 60, ist sehr gering. Dies liegt darin begründet, daß ohnehin ein vergleichsweise großer technologischer Aufwand für die Produktion von Fasern ohne Mikrorisse getrieben wird, da die Lebensdauer optischer Leitungen entscheidend von der Mikrorißfreiheit abhängt. Beispielsweise werden Zugbelastungsprüfungen bei jeder nach einem heute üblichen Herstellungsverfahren hergestellten Einmodenfaser routinemäßig durchgeführt. Hierdurch erfolgt bereits unmittelbar nach der Herstellung eine Aussonderung der wenigen Faserabschnitte mit Mikrorissen.

Die Langzeitstabilität der erfindungsgemäßen Faserspulen kann jedoch auch ein durch eine oder die Kombination mehrerer der folgenden Maßnahmen wesentlich verbessert werden.

Bereits beim Ziehvorgang oder unmittelbar danach wird die frische Quarzglasoberfläche des Fasermantels durch eine Schutzschicht gegen Korrosion passiviert. Dies geschieht somit vor dem Aufbringen der Kunststoff-Primärschicht. Als Material für die Schutzschicht haben sich insbesondere Kohlenstoff, Titandioxid und Metalle wie Zinn bewährt. Fasern mit derartigen Schutzschichten sind kommerziell erhältlich.

Eine weitere Möglichkeit besteht darin, eine Schutzschicht zu verwenden, die zusätzlich zu der zuvor beschriebenen Wirkung eine permanente Druckspannung im Fasermantel erzeugt. Derartige Fasern mit einer TiO₂-Beschichtung auf der Manteloberfläche können von der Firma Corning Glas, USA, bezogen werden.

Solange die von der Krümmung verursachte Zugspannung kleiner als die schon vorhandene Druckspannung ist, ist die Faser gegen Spannungskorrosion geschützt.

Ferner können für die Primärbeschichtung der Fasern spezielle Kunststoffe und Verfahren eingesetzt werden, die eine besonders feste Bindung zwischen Quarzglas und Kunststoff erzeugen und somit die Langzeitstabilität wesentlich erhöhen. Derartige Einmodenfasern werden von der Firma Ensign Bickford, USA, produziert, einem Unternehmen, daß sich auf hartbeschichtete Quarzglasfasern (HCS-Fasern, Hart Clad Silica) spezialisiert hat.

Gemäß einer weiteren Möglichkeit kann die Primärschicht bei Standard-Einmodenfasern von außen mit einer dünnen Metallschicht, z.B. aus Aluminium oder Zinn, überzogen werden und so das Eindiffundieren von Wasser und die weitere Diffusion zur Faseroberfläche verhindert werden.

Eine fünfte Möglichkeit besteht darin, die Faserspule auf ein wasserundurchlässiges Röhrchen, z.B. aus Metall, Glas oder Quartzglas, aufzuwickeln und in Kunststoff einzugießen. Der Kunststoff kann durch eine Metallauflage gegen die Eindiffusion von Wasser geschützt werden.

Schließlich besteht noch die Möglichkeit, eine freitragende Faserspule aus primärbeschichteter Einmodenfaser, die durch Verkleben der Einzelwindungen zusammengehalten wird, mit einem dünnen metallischen Überzug als Diffusionssperre gegen Wasser zu versehen.

Weitere Einzelheiten, Vorteile und Merkmale der Erfindung sind in der nachstehenden Beschreibung eines Ausführungsbeispiels anhand der Zeichnungen näher erläutert.

Es zeigen:
- Fig. 1: eine Ansicht einer Ausführungsform einer erfindungsgemäßen Faserspule;
- Fig. 2: eine Seitenansicht der Faserspule gemäß Fig. 1;
- Fig. 3: einen Schnitt eines für die erfindungsgemäße Faserspule verwendeten Lichtwellenleiters.

In dem in Fig. 1 dargestellten Ausführungsbeispiel wird ein Segment einer Standard-Einzelmoden-Faser von 5 m Länge mit einer Grenzwellenlänge von 1230 Nanometern verwendet. Die Faserspule 10 weist einen Biegeradius auf, der den an sich für diesen Lichtwellenleiter zulässigen Biegeradius unterschreitet, so daß die Faserspule 10 einen Durchmesser von 16 mm aufweist.

Wie aus Fig. 2 ersichtlich ist, ist eine Mehrzahl von Windungen für die Faserspule vorgesehen. Bei einer Ausführungsform sind 40 Windungen für die Faserspule 10 vorgesehen.

Wie aus Fig. 3 ersichtlich ist, besteht ein Lichtwellenleiter aus einer Glasfaser 12 im Kernbereich, die gegen Korrosion geschützt ist. In an sich bekannter Weise weist der Lichtwellenleiter einen äußeren Kunststoffmantel 14 auf. Bevor der Kunststoffmantel 14 aufgebracht wird, wird jedoch eine Schutzschicht 16, beispielsweise aus Metall, Titandioxid oder Kohlenstoff, aufgebracht, die Druckkräfte in die Glasfaser 12 einleitet und die Entstehung von Mikrorissen verhindert.

## Patentansprüche

1. Wellenlängenfilter für Lichtwellenleiter, dadurch gekennzeichnet, daß es einen bei Unterschreitung des minimalen Biegeradius spulenförmig zu einer Faserspule (10) gekrümmten Lichtwellenleiter aufweist.

2. Wellenlängenfilter nach Anspruch 1, dadurch gekennzeichnet, daß es als Faserspule (10) in den zu beeinflussenden Lichtwellenleiter eingespleißt ist, oder daß es aus einem zu einer Faserspule (10) gekrümmten Abschnitt des zu beeinflussenden Lichtwellenleiters besteht.

3. Wellenlängenfilter nach einem der vorhergehenden Ansprüche, dadurch gekennzeichnet, daß die Faserspule einen Spulendurchmesser zwischen 3 mm und 30 mm und eine Windungszahl zwischen 1 und 200 aufweist.

4. Wellenlängenfilter nach einem der vorhergehenden Ansprüche, dadurch gekennzeichnet, daß die Faserspule insbesondere freitragend ausgebildet ist und ihre Windungen durch Verklebung fixiert sind.

5. Wellenlängenfilter nach einem der vorhergehenden Ansprüche, dadurch gekennzeichnet, daß die Faserspule auf einem zylindrischen Kern mit geringer thermischer Ausdehnung angeordnet ist.

6. Wellenlängenfilter nach einem der vorhergenenden Ansprüche, dadurch gekennzeichnet, daß die Faserspule freitragend ein- oder beidseitig eines optischen Steckverbinders an den aus den Steckerstiften herausführenden Faserabschnitten angeordnet ist.

7. Wellenlängenfilter nach Anspruch 6, dadurch gekennzeichnet, daß die Faserspule auf einem zu einem Spulenkern ausgebildeten zylindrischen Segment, vorzugsweise einem Stift des optischen Steckverbinders, ein- oder beidseitig, an den entsprechenden Faserabschnitten des optischen Steckverbinders, angeordnet ist.

8. Wellenlängenfilter nach einem der vorhergehenden Ansprüche, dadurch gekennzeichnet, daß eine passivierende Schutzschicht, insbesondere aus Kohlenstoff, TiO₂ und/oder Metallen, auf die Oberfläche des Fasermantels vor Aufbringen einer Kunststoff-Primärschicht aufgebracht ist.

9. Wellenlangenfilter nach Anspruch 8, dadurch gekennzeichnet, daß die Schutzschicht eine Druckspannung in den Fasermantel einleitet.

10. Wellenlängenfilter nach einem der vorhergehenden Ansprüche, dadurch gekennzeichnet, daß zwischen Fasermantel und Kunststoff-Primärschicht eine besonders feste Bindung hergestellt ist und insbesondere der Fasermantel hartbeschichtet ist.

11. Wellenlängenfilter nach einem der vorhergehenden Ansprüche, dadurch gekennzeichnet, daß die Kunststoff-Primärschicht einer Standard-Einmodenfaser im Bereich der Faserspule mit einer dünnen Metallschicht überzogen ist.

12. Wellenlängenfilter nach einem der vorhergehenden Ansprüche, dadurch gekennzeichnet, daß die Faserspule in ihrer Gesamtheit mit einer insbesondere metallischen Auflage als Diffusionssperre gegen Wasser gekapselt ist.
